# EUROPÄISCHE PATENTSCHRIFT

(11) **EP 0 761 976 B1**
(45) Veröffentlichungstag und Bekanntmachung des Hinweises auf die Patenterteilung: **04.10.2001**
(21) Anmeldenummer: 96112480.7
(22) Anmeldetag: 02.08.1996
(51) Int. Cl.: F04D 29/02, F04D 29/42, B29C 41/06

(54) **Verfahren zur Herstellung eines Ventilatorgehäuses**
Fabrication method for a fan casing
Procédé de fabrication d'un boîtier d'un ventilateur

(30) Priorität: 10.08.1995 DE 19529401
(43) Veröffentlichungstag der Anmeldung: 12.03.1997
(73) Patentinhaber: Hürner-Funken GmbH, 53773 Hennef (DE)
(72) Erfinder: Severyns, Horst Willy, 53844 Troisdorf (DE)
(74) Vertreter: Brandenburg, Thomas, Dr.

(56) Entgegenhaltungen:
- FR-A- 2 576 544
- US-A- 5 063 832

## Beschreibung

Die Erfindung betrifft ein Verfahren zur Herstellung eines Radialventilatorgehäuses aus Kunststoff mit rechts oder links liegendem Druckstutzen. Die Erfindung betrifft auch das aus Kunststoff gefertigte Radialventilatorgehäuse mit rechts oder links liegendem Druckstutzen.

Radialventilatorgehäuse werden überwiegend in der Weise hergestellt, daß zunächst zwei Gehäusehälften durch Tiefziehen geformt werden, die dann durch Zusammenschweißen längs ihrer Umfangsränder verbunden werden. Dieses Verfahren ist durch den dabei entstehenden Abfall materialaufwendig und durch die separate Herstellung von zwei Gehäusehälften und ihre Verschweißung auch arbeitsaufwendig. Die Wandstärke des Gehäuses ist durch das Tiefziehen unterschiedlich, so daß in bestimmten Fällen innere Versteifungsrippen nötig sind. Die Innenkanten des Gehäuses sind meistens scharf ausgeprägt. Bei der Luftströmung durch das Gehäuse entsteht daher ein beachtliches Strömungsgeräusch. Ein weiterer Nachteil der durch Tiefziehen gefertigten Ventilatorgehäuse mit rechts oder links liegendem Druckstutzen, im übrigen aber identischer Ausbildung besteht darin, daß hierzu unterschiedliche Tiefziehformen erforderlich sind. Ferner erfordern die bisher gefertigten Radialventilatorgehäuse eine erhebliche Nachbearbeitung, so z.B. das Einsetzen metallischer Gewindebuchsen (z.B. für die Anbringung des Düsenrings) in dem Gehäusekörper.

Aus FR-A-2 576 544 ist die Herstellung von Hohlkörpern, wie Treibstoffbehältern, Helmen für Motoradfahrer, Heißwasserbereitungsbehältern oder Lautsprechergehäusen durch Rotationsgießen bekannt. Öffnungen bei diesen Hohlkörpern werden im allgemeinen dadurch gebildet, daß die Drehung der Rotationsgießform um die beiden zueinander senkrecht stehenden Achsen mit der gleichen Geschwindigkeit erfolgt. Bei der Herstellung des Lautsprechergehäuses werden die Öffnung zum Einsetzen und Halten des Lautsprechers auf der Vorderseite und die Öffnung zum Einsetzen eines Kabelverbindungsstücks auf der Rückseite durch Ausschnitte in der Vorderwand bzw. der Rückwand gebildet. Dabei ist durch das Rotationsgießen nur die Vorderwand, nicht aber die Rückwand für den Einschnitt zur Halterung des Lautsprechers vorgesehen und entsprechend vorgebildet. Die für die Ausschnitte vorgesehenen Gehäuseseiten sind in Bezug auf die Mittelebene nicht symmetrisch.

Der Erfindung liegt die Aufgabe zugrunde, ein Verfahren zur Herstellung eines Radialventilatorgehäuses aus Kunststoff mit verringertem Material- und Arbeitsaufwand und damit reduzierten Fertigungskosten zu schaffen. Ferner soll ein Verfahren zur Herstellung eines Radialventilatorgehäuses aus Kunststoff geschaffen werden, das sich im Vergleich zu bisherigen Fertigungsverfahren durch erheblich geringere Investitionskosten für die Fertigungseinrichtung auszeichnet. Ferner soll das Verfahren die Herstellung von Gehäusen mit rechts oder links liegendem Druckstutzen mit Hilfe derselben Fertigungseinrichtung erlauben. Weiter ist es Aufgabe der vorliegenden Erfindung, ein Verfahren zur Herstellung eines Radialventilatorgehäuses zu schaffen, bei dem Änderungen an der Gehäuseform leicht möglich sind. Ferner ist es Aufgabe der Erfindung, ein Radialventilatorgehäuse aus Kunststoff mit gleichmäßiger Wandstärke zu schaffen, um so das Gehäuse mit minimalem Materialeinsatz zu realisieren. Schließlich soll ein Radialventilatorgehäuse mit vermindertem Strömungsgeräuschpegel geschaffen werden. Weitere Vorteile der Erfindung ergeben sich aus der nachfolgenden Beschreibung.

Diese Aufgabe wird erfindungsgemäß dadurch gelöst, daß man durch Rotationsgießen einen allseitig geschlossenen, zur Mittelebene symmetrischen Gehäuseformling herstellt und in die eine Stirnseite des Gehäuseformlings eine Ansaugöffnung, in die gegenüberliegende Stirnseite eine Öffnung für die Antriebswelle und in den Druckstutzen eine Ausblasöffnung einschneidet. Durch Rotationsgießen wird zunächst ein Gehäuseformling hergestellt, der wegen seiner Symmetrie ein Gehäuse mit links oder rechts angeordnetem Druckstutzen ergibt, je nachdem, ob die Ansaugöffnung auf der einen oder anderen Seite des Formlings eingeschnitten wird. Es ist anders als beim Tiefziehen keine Schweißarbeit zur Herstellung des Gehäuses erforderlich. Es kann mit minimalem Materialeinsatz gearbeitet werden, weil beim Rotationsgießen eine sehr gleichmäßige Wandstärke erreicht wird.

Zur Bildung des Gehäuseformlings wird die in der Symmetrieebene geteilte Rotationsgießform mit der für die Bildung des Gehäuses erforderliche Menge Kunststoffpulver beschickt. Die Formhälften werden geschlossen und zusammengeschraubt. Die beschickte Form wird dann auf eine Temperatur über dem Schmelzpunkt des Kunststoffpulvers erhitzt und gleichzeitig um zwei Achsen gedreht, die zueinander senkrecht stehen. Das Kunststoffpulver schmilzt während der Erhitzung und Rotation und verteilt sich gleichmäßig über die Innenseite der Form. Wenn sich das gesamte Pulver zu einer homogenen Schicht auf der Innenseite der Formwandung verteilt hat, wird die Form langsam abgekühlt. Nach genügender Abkühlung unter den Erweichungspunkt des Kunststoffs wird die Form geöffnet und der fertige Gehäuseformling aus der Form entnommen. Aus diesen Formlingen werden dann die Gehäuse mit rechts oder links angeordneten Druckstutzen hergestellt, indem auf den Stirnseiten des Formlings die Ansaugöffnung und die Antriebsöffnung in der gewünschten Anordnung zum Druckstutzen eingeschnitten werden und außerdem der Druckstutzen geöffnet wird.

Nach der bevorzugten Ausführungsform des erfindungsgemäßen Verfahrens gießt man auf beiden Seiten des Gehäuseformlings ringförmig angeordnete Gewindebuchsen ein. Die Gewindebuchsen für die Anbringung des Düsenrings in der Ansaugöffnung sind somit von der Gießfertigung im Formling enthalten und brauchen nicht wie bei anderen Gehäuseherstellungsverfahren, wie z.B. dem Tiefziehverfahren, in das Gehäuse nachträglich eingesetzt zu werden. Es ist auch möglich, Gehäuseformlinge mit auf nur einer Stirnseite angeordneten Gewindebuchsen herzustellen, die dann für die Herstellung von links oder rechts ausblasenden Ventilatorgehäusen verwendet werden. Bein Rotationsgießen können auch andere metallische oder aus Kunststoff bestehende Körper in den Formling eingegossen werden.

Die Aufgabe wird ferner bei dem eingangs genannten Radialventilatorgehäuse erfindungsgemäß dadurch gelöst, daß dieses ein Rotationsgußkörper ist, in dessen eine Stirnwandung eine Ansaugöffnung und in dessen gegenüberliegende Stirnwand eine Antriebsöffnung eingeschnitten sind oder umgekehrt, je nach Lage des Druckstutzens, und in dessen Druckstutzen eine Ausblasöffnung eingeschnitten ist. Es hat sich gezeigt, daß durch die Erfindung nicht nur die oben genannten fertigungstechnischen Vorteile und Kostenvorteile erreicht werden, sondern daß auch das Gehäuse selbst im Vergleich zu dem aus Tiefziehteilen gefertigten Gehäuse Vorteile bietet. Durch das Fehlen von scharfen Kanten und Schweißnähten ergibt sich ein aerodynamisch günstig geformter Innenraum des Gehäuses, der sich in einer Verminderung des Strömungsgeräusches und Strömungswiderstandes zeigt.

Bei der bevorzugten Ausführungsform enthält das Gehäuse auf beiden Stirnseiten mehrere ringförmig angeordnete Gewindebuchsen zur Anbringung eines Düsenrings. Ausgehend von einem Gehäuseformling mit beidseitig eingegossenen Gewindebuchsen können wahlweise links oder rechts ausblasende Ventilatorgehäuse hergestellt werden.

Eine Ausführungsform der Erfindung wird nachfolgend an Hand der Zeichnung näher beschrieben. Es zeigen
Figur 1 die Seitenansicht des rotationsgegossenen Gehäuseformlings;
Figur 2 einen Schnitt nach der Linie II-II der Figur 1; und
Figur 3 einen Schnitt wie Figur 2 des fertigen Gehäuses.

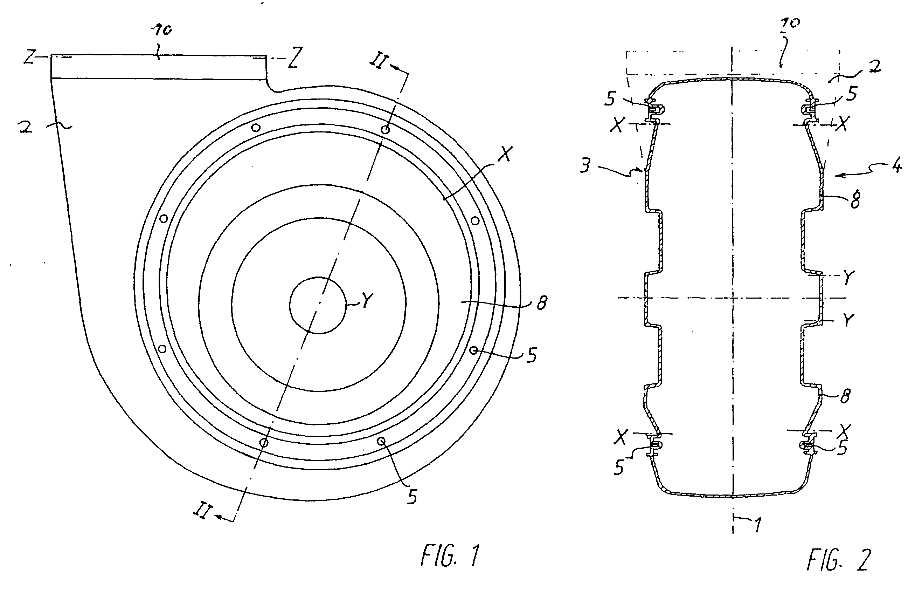

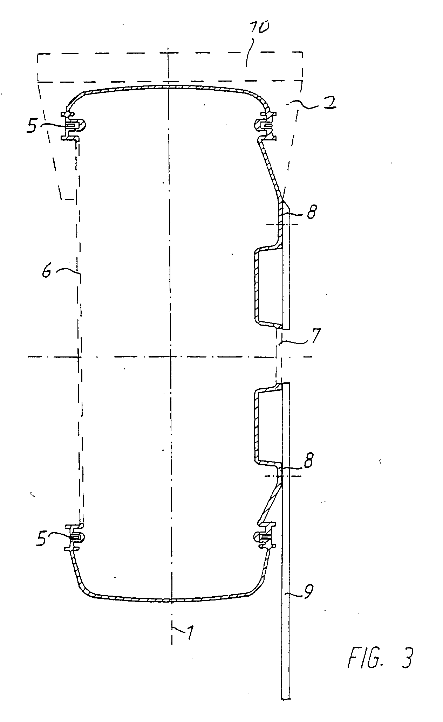

Der in den Figuren 1 und 2 dargestellte Gehäuseformling ist ein allseitig geschlossener hohler Rotationsgußkörper einer Wandstärke von etwa 3 mm. Der Formling ist zur Mittelebene 1 spiegelsymmetrisch, so daß aus ihm Ventilatorgehäuse mit links oder rechts angeordnetem Druckstutzen (in Ansaugrichtung gesehen) hergestellt werden können, je nach dem, in welcher der beiden Seiten 3 oder 4 die Ansaugöffnung 6 (Fig. 3) vorgesehen wird. Zur Herstellung eines Gehäuses für einen von der Seite 3 ansaugenden Ventilator ist aus dem dargestellten Formling auf der Seite 3 ein Teller längs der kreisförmigen Schnittspur X-X auszuschneiden. Auf der gegenüberliegenden Seite 4 wird längs der kreisförmigen Schnittspur Y-Y eine Scheibe ausgeschnitten, um den Durchtritt der Motorwelle zu ermöglichen. Schließlich ist die Stirnfläche des Druckstutzens 2 längs der kreisförmigen Schnittspur Z-Z aufzuschneiden.

Bei der dargestellten Ausführungsform wurde bei der Herstellung des Formlings auf beiden Seiten 3 und 4 ein Kranz von je acht metallischen Gewindebuchsen 5 in die Seitenwandungen eingegossen. Nach dem Aufschneiden der Ansaugöffnung 6 (vergl. Fig. 3) ermöglichen die Gewindebuchsen 5 das Anschrauben eines Düsenrings (nicht dargestellt) in der Öffnung 6. Figur 3 zeigt auch die eingeschnittene Öffnung 7 für den Durchgang der Motorwelle (nicht dargestellt) für den Laufradantrieb. Es ist ersichtlich, daß die Seiten 3 und 4 eine ebene Ringfläche 8 haben, die zur Anlage und Befestigung des Ventilatorgehäuses an einer Ständerplatte 9 dienen kann.

Das Gehäuse kann aus beliebigen thermoplastischenm Kunststoffen hergestellt werden. Bevorzugt werden Polyolefine, wie z.B. Polyethylen, Polypropylen, auch in flammfester Ausführung, sowie Polyvinylchlorid, nachchloriertes Polyvinylchlorid und Polyvinylidenfluorid.

## Patentansprüche

1. Verfahren zur Herstellung eines Radialventilatorgehäuses aus Kunststoff mit rechts oder links liegendem Druckstutzen (2), **dadurch gekennzeichnet, daß** man
durch Rotationsgießen einen allseitig geschlossenen, zur Mittelebene (1) symmetrischen Gehäuseformling mit einander gegenüberliegenden Stirnseiten (3 und 4) herstellt, die für das Einschneiden einer Ansäugöffnung (6) und einer Antriebsöffnung (7) vorgesehen sind,
je nach der gewünschten Lage des Druckstutzens (2) die Ansaugöffnung (6) in die eine Stirnseite (3 oder 4) und die Antriebsöffnung (7) in die gegenüberliegende Stirnseite (4 bzw. 3) einschneidet, und in den Druckstutzen (2) eine Ausblasöffnung (10) einschneidet.

2. Verfahren nach Anspruch 1, **dadurch gekennzeichnet, daß** man auf beiden Stirnseiten (3,4) des Gehäuseformlings beim Rotationsgießen ringförmig angeordnete Gewindebuchsen (5) eingießt.

3. Radialventilatorgehäuse aus Kunststoff mit rechts oder links liegendem Druckstutzen (2), **dadurch gekennzeichnet, daß** es ein Rotationsgußkörper ist, in dessen eine Stirnwandung (3) eine Ansaugöffnung (6) und in dessen gegenüberliegende Stirnwand (4) eine Antriebsöffnung (7) eingeschnitten sind oder umgekehrt, je nach Lage des Druckstutzens (2), und in dessen Druckstutzen (2) eine Ausblasöffnung (10) eingeschnitten ist.

4. Radialventilatorgehäuse nach Anspruch 3, **dadurch gekennzeichnet, daß** es auf beiden Stirnseiten (3,4) mehrere ringförmig angeordnete Gewindebuchsen (5) zur Anbringung eines Düsenrings enthält.

## Claims

1. A process for manufacturing a radial fan housing from synthetic material, having a right or left located pressure connection (2) and
a housing moulded body is produced, which is closed on all sides through rotary casting and symmetrical to the central plane (1), having opposingly located end surfaces (3 & 4) provided for cutting a suction opening (6) and a drive opening (7), each according to the desired position of the pressure connection (2), the suction opening (6) being cut in the one end surface (3 or 4) and the drive opening (7) being cut in the opposingly located end surface (4 or 3) and a blow-out opening (10) being cut in the pressure connection (2).

2. A process according to claim 1, **characterised in that** with rotary casting, threaded inserts (5) arranged ring-like are cast integral on both sides (3,4) of the housing moulded body.

3. A radial fan housing made from synthetic material, having a right or left located pressure connection (2), **characterised in that** it is a rotary casting body, in whose one end wall (3) a suction opening (6) is cut and in whose opposingly located end wall (4), a drive opening (7) is cut or vice versa, according to the position of the pressure connection (2), and in whose pressure connection (2) a blow-off opening (10) is cut.

4. A radial fan housing according to claim 3, **characterised in that** it contains a plurality of threaded inserts (5) arranged ring-like on both end surfaces (3,4) for the attachment of a nozzle ring.

## Revendications

1. Procédé de fabrication d'un boîtier de ventilateur radial en plastique avec tuyau bifurqué situé à droite ou à gauche (2), **caractérisé en ce que**
l'on fabrique, par moulage par rotation, une ébauche de boîtier symétrique par rapport au plan central (1), fermée de tous côtés avec des faces extérieures opposées l'une à l'autre (3 et 4), qui sont prévues pour la découpe d'une ouverture d'aspiration (6) et d'une ouverture pour la transmission (7),
selon l'emplacement souhaité pour le tuyau bifurqué (2), on découpe une ouverture d'aspiration (6) dans l'une des faces extérieures (3 ou 4) et une ouverture pour la transmission (7) dans la face extérieure opposée (4 ou 3), et
on découpe dans le tuyau bifurqué (2) une ouverture pour la soufflerie (10).

2. Procédé selon la revendication 1, **caractérisé en ce que** l'on coule, sur les deux faces extérieures (3, 4) de l'ébauche de boîtier, lors du moulage par rotation, des douilles filetées (5) disposées en cercle.

3. Boîtier de ventilateur radial en plastique avec tuyau bifurqué situé à droite ou à gauche (2), **caractérisé en ce qu'**il s'agit d'un corps moulé par rotation, dans la paroi extérieure (3) duquel une ouverture d'aspiration (6) et dans la paroi extérieure opposée (4) duquel une ouverture pour la transmission (7) sont pratiquées ou vice-versa, en fonction de l'emplacement du tuyau bifurqué (2), et dans le tuyau bifurqué (2) duquel une ouverture pour la soufflerie (10) est pratiquée.

4. Boîtier de ventilateur radial selon la revendication 3, **caractérisé en ce qu'**il comporte, sur ses deux faces extérieures (3, 4) plusieurs douilles filetées disposées en cercle (5) pour la mise en place d'une bague de tuyère.
